## Europäisches Patentamt

## European Patent Office

## Office européen des brevets

(19)

(11) Veröffentlichungsnummer: **0 064 566**
**B1**

(12) **EUROPÄISCHE PATENTSCHRIFT**

(45) Veröffentlichungstag der Patentschrift:
**12.03.86**

(21) Anmeldenummer: **81103543.5**

(22) Anmeldetag: **09.05.81**

(51) Int. Cl.⁴: **A 01 F 29/16,** A 01 D 75/18,
G 01 V 3/00

(54) **Vorrichtung zum Erkennen von eisenhaltigem Material in Feldhäckslern.**

(43) Veröffentlichungstag der Anmeldung:
**17.11.82 Patentblatt 82/46**

(45) Bekanntmachung des Hinweises auf die Patenterteilung:
**12.03.86 Patentblatt 86/11**

(84) Benannte Vertragsstaaten:
**AT BE CH DE FR GB LI NL**

(56) Entgegenhaltungen:
**FR - A - 2 466 184**
**GB - A - 2 013 072**
**US - A - 3 972 156**

(73) Patentinhaber: **Klöckner-Humboldt-Deutz Aktiengesellschaft,**
**Deutz-Mülheimer-Strasse 111 Postfach 80 05 09,**
**D-5000 Köln 80 (DE)**

(72) Erfinder: **Pürrer, Josef, Inneres Flassental 13,**
**D-7702 Gottmadingen (DE)**
Erfinder: **Binder, Berthold, Etzenbühlstrasse 1,**
**D-7702 Gottmadingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Erkennen von eisenhaltigem Material in Feldhäckslern mit den Merkmalen des Oberbegriffs des Hauptanspruchs.

Eine Vorrichtung zum Erkennen von eisenhaltigem Material in Feldhäckslern ist beispielsweise aus der DE-A-2 552 805 bekannt geworden. Der Feldlhäcksler selbst ist hierbei in herkömmlicher Weise aufgebaut. Den Häckselorganen, bestehend aus einer umlaufenden Messertrommel und einer Gegenschneide, ist eine Zuführungsvorrichtung vorgeschaltet, die sich aus zwei unteren, ortsfest im Maschinenrahmen angeordneten sowie zwei oberen, zum Zwecke der Anpassung an unterschiedlich dicke Erntegutmatten schwenkbeweglich gelagerten oberen Zuführungsrollen zusammensetzt. Diese paarweise zusammenwirkenden unteren und oberen Zuführungsrollen haben die Aufgabe, das aufgenommene Erntegut zu verdichten und den Häckselorganen zuzuführen. Bei der bekannten Vorrichtung ist eine Signalerzeugereinrichtung in der vorderen, unten liegenden Zuführungsrolle installiert. Die bekannte Signalerzeugereinrichtung umfasst einen Signalerzeuger für ein konstantes Signal sowie eine Magnetspuleneinrichtung, die in der Lage ist, den Signalerzeuger zu unterbrechen, falls unerwünschte Gegenstände in den Bereich der Einzugswalzen gelangen.

Eine weitere Vorrichtung zum Orten von ferromagnetischen Fremdkörpern ist in der GB-A-2 013 072 dargestellt und beschrieben. Hier ist die Signalerzeugereinrichtung beidseitig auf einer Achse gelagert. Ein Ende dieser Achse stützt sich im Antriebswellenstummel für die Zuführungsrolle ab. Der Antriebswellenstummel ist über ein Kugellager an einer Seite des Maschinenrahmens gelagert. Zwischen dem aussen liegenden Lager des Antriebswellenstummels und dem innen liegenden Lager der Achse besteht ein relativ grosser räumlicher Abstand. Auch zwischen der seitlichen Wandung des Maschinenrahmens und dem Antriebskettenrad des Antriebswellenstummels ist ebenfalls ein grosser Abstand vorhanden. Die vorgeschlagene Lagerung der Zuführungsrolle hat den Nachteil, dass sich die Lage der Achse der Signalerzeugereinrichtung bei auftretenden Belastungen relativ stark verändert. So bewirkt beispielsweise eine Durchbiegung des Antriebswellenstummels, durch die grossen Lagerabstände unterstützt, eine grosse Auslenkung dieser Achse. Auch bleibt eine einseitige Auslenkung der Zuführungsrolle nicht ohne Auswirkung auf die Lage der Achse. Es hat sich aber in der Praxis herausgestellt, dass schon kleine Lageabweichungen der Signalerzeugereinrichtung in Bezug auf sowohl umlaufende als auch feststehende Maschinenelemente unerwünschte Störsignale auslösen.

Was die gegenüberliegende Seite der Zuführungsrolle angeht, sind ähnlich gelagerte Verhältnisse anzutreffen. Dieses Ende der Zuführungsrolle ist mit Hilfe eines Lagers direkt auf der Achse abgestützt. Die Kräfte, die auf die Zuführungsrolle einwirken, werden in diese Achse eingeleitet, was zu deren Durchbiegung führt. Auch in diesem Fall ist die vorgeschlagene Abstützung der Zuführungsrolle nicht ohne Rückwirkung auf die Lage der Signalerzeugereinrichtung. Im übrigen bleiben auch elastische Verformungen des Maschinenrahmens nicht ohne Einfluss auf die Lage der Signalerzeugereinrichtung.

Es hat sich herausgestellt, dass schon geringe Form- bzw. Lageveränderungen der Signalerzeugungseinrichtung zu derartigen Störsignalen führen. Umgekehrt können derartige Signale auch dadurch ausgelöst werden, dass die, die Signalerzeugereinrichtung umschliessende Zuführungsrolle nicht rückwirkungsfrei in Bezug auf die Signalerzeugereinrichtung gelagert ist, sodass elastische Verformungen dieser Rolle zu einer elastischen Verformung der Signalerzeugereinrichtung führen bzw., dass zumindest ihre Lage zum Rahmen der Maschine derart verändert wird, dass ein solches unerwünschtes Störsignal auftritt.

Der vorliegenden Erfindung liegt die Aufgabe zugrunde, unerwünschte Störsignale bei einer Vorrichtung der in Rede stehenden Gattung durch eine praktisch von äusseren Einflüssen rückwirkungsfrei gelagerte Signalerzeugereinrichtung auszuschalten.

Die Erfindung löst die gestellte Aufgabe durch die im Kennzeichen des Hauptanspruchs angegebenen Massnahmen.

Ein bevorzugtes Ausführungsbeispiel der Erfindung wird nachstehend anhand der Zeichnungen näher erläutert. Es zeigen:

Fig. 1 einen Feldhäcksler mit einer Vorrichtung zum Erkennen von eisenhaltigen Fremdkörpern in schematischer, teils geschnittener Seitenansicht;

Fig. 2 die Lagerung einer Signalerzeugereinrichtung innerhalb der vorderen, unteren Zuführungsrolle eines Feldhäckslers nach Fig. 1.

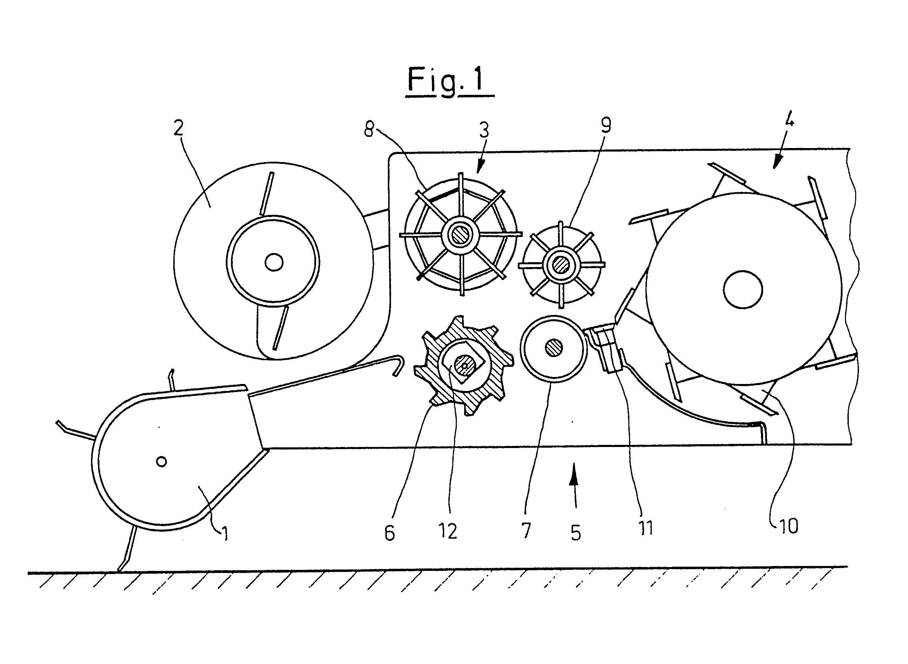

In Fig. 1 ist der grundsätzliche Aufbau eines Feldhäckslers schematisch im Längsschnitt wiedergegeben. Für die Erfindung ist es hierbei bedeutungslos, ob es sich um einen angebauten oder selbstfahrenden Häcksler handelt.

Über eine Pick-up 1 wird das am Boden liegende Erntegut aufgenommen. Eine Schnecke 2 mit entgegengesetzt gerichteten Schneckengängen führt das Erntegut zur Mitte hin zusammen und übergibt es an eine Zuführungsvorrichtung , von wo es an die Häckselorgane 4 weitergegeben wird. Anstelle der hier gezeigten Pick-up können selbstverständlich auch andere Vorsatzgeräte, wie z.B. eine Vorrichtung zum Ernten von in Reihe stehendem Mais, Verwendung finden.

Die Zuführvorrichtung 3 wird aus unteren, antreibbaren und ortsfest im Maschinenrahmen 5 gelagerten Zuführungsrollen 6 und 7 sowie oberen, in Bezug auf den Maschinenrahmen 5 schwenkbeweglich gelagerten Zuführungsrollen 8 und 9 gebildet. Diese Zuführungsrollen werden durch nicht dargestellte Zugfedern in Richtung auf die unteren Rollen 6 und 7 gezogen und haben die Aufgabe, das Erntegut neben der Förderung in Richtung auf die Häckselorgane 4 zu einer Matte zu verdichten.

Die Häckselorgane 4 bestehen in bekannter Weise aus einer umlaufenden Messertrommel 10, die mit einer ortsfesten Gegenschneide 11 zusammenwirkt.

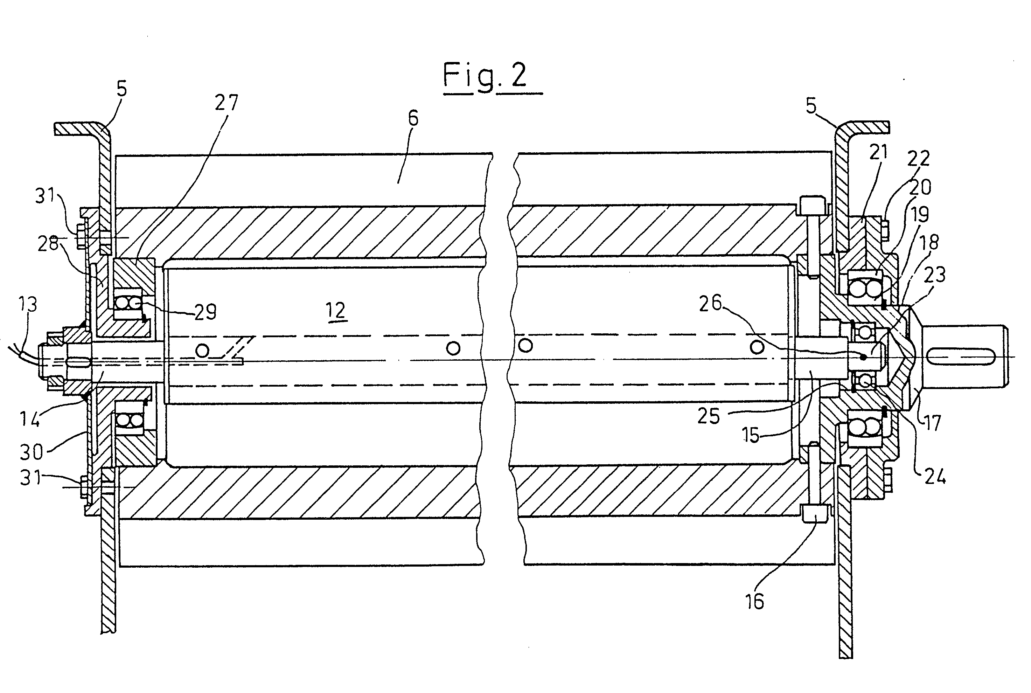

Vorzugsweise in der vorderen, unteren Einzugsrolle 6 ist eine Signalerzeugereinrichtung 12 in Bezug auf den Maschinenrahmen 5 ortsfest gelagert. Um eine störungsfreie Funktion der Signalerzeugereinrichtung zu gewährleisten, sind äussere Einflüsse, die zu einer Lage- und/oder Formveränderung der Signalerzeugereinrichtung führen würden, von letzterer fernzuhalten. Um dieses Ziel zu erreichen, ist die Signalerzeugereinrichtung entsprechend Fig. 2 wie folgt gelagert.

Die Signalerzeugereinrichtung 12 besteht im dargestellten Fall aus mehreren Permanentmagneten, denen mehrere Induktionsspulen zugeordnet sind. Die Anschlüsse dieser Induktionsspulen, die mit einer nicht dargestellten Signalverarbeitungseinrichtung verbunden sind, sind mit der Bezugsziffer 13 bezeichnet. Anstelle des beschriebenen Aufbaues der Signalerzeugereinrichtung kann diese auch beliebig abweichend ausgestaltet sein, da es für ihre bestimmungsgemässe Funktion nur darauf ankommt, mitgeführte Fremdkörper zu erfassen.

Die Signalerzeugereinrichtung 12 ist einerseits mit einem in der Zeichnung links liegenden Achsstummel 14 und andererseits mit einem in der Zeichnung rechts liegenden Achsstummel 15 fest verbunden. Wichtig ist, dass die Signalerzeugereinrichtung 12 ortsfest feststehend in Bezug auf den Maschienrahmen 5 angeordnet ist. Die vordere, untere Zuführungsrolle 6 ist als Hohlwalze ausgebildet. Sie ist, um die Funktion der Vorrichtung zum Erkennen von eisenhaltigem Material zu gewährleisten, aus nichtmagnetisierbarem Werkstoff, im dargestellten Ausführungsbeispiel aus Kunststoff, gefertigt.

Die in der Zeichnung rechts liegenden Lagerungen für den Achsstummel 15 der Signalerzeugereinrichtung 12 und der drehantreibbaren Zuführungsrolle 6 sind wie folgt vorgenommen:

Das in der Zeichnung rechts liegende Ende der Zuführungsrolle 6 ist über mehrere, am Umfang der Rolle verteilte, radial gerichtete Befestigungsschrauben 16 mit einem etwa glockenförmig ausgebildeten Antriebswellenstummel 17 drehfest verbunden. Zum Antrieb der Zuführungsrolle 6 steht das freie Ende des Antriebswellenstummels 17 mit einer nicht dargestellten Antriebswelle in drehfester Verbindung.

Der Antriebswellenstummel 17 weist einen Lagerbund 18 auf, der ein Pendulkugellager 19 trägt. Der feststehende Aussenring 20 des Pendelkugellagers 19 wird durch ein zweiteiliges Lagergehäuse 21 gehalten. Mittels mehrerer am Umfang verteilter Befestigungsschrauben 22 ist das Lagergehäuse 21 am Maschinenrahmen 5 festgelegt.

Der Achsstummel 15 weist einen Lagerzapfen 23 auf, der mit Hilfe eines weiteren Kugellagers 24 in einer Ausdrehung 25 des Antriebswellenstummels 17 gelagert ist.

Das Kugellager 24 und das Pendel-Kugellager 19 sind derart angeordnet, dass sie einen gemeinsamen Mittelpunkt 26 aufweisen. Durch das Pendel-Kugellager 19 und dessen Lage zum weiteren Kugellager 24 können auftretende Formveränderungen des Maschinenrahmens 5 bzw. Formänderungen der Zuführungsrolle 6 und des Antriebswellenstummels 17 derart aufgefangen werden, dass keine Form- bzw. Lageveränderung des Achsstummels 15 und damit der Signalerzeugereinrichtung 12 hervorgerufen werden. Auf diese Weise lassen sich zuverlässig unerwünschte Störgrössen ausschalten.

Das in der Zeichnung links liegende Ende der Zuführungsrolle 6 stützt sich auf einem Ring 27 ab. Ein mit dem Maschinenrahmen 5 fest verbundener Lagerflansch 28 trägt ein Pendelkugellager 29, dessen Aussenring drehfest in den Ring 27 eingefügt ist. Auf diese Weise wird das in der Zeichnung links liegende Ende der Zuführungsrolle 6 über den Lagerflansch 28 direkt am Maschinenrahmen 5 abgestützt, ohne dass hier eine Verbindung zum Achsstummel 14 besteht. Auftretende Form- und Lageveränderungen des Maschinenrahmens 5 bzw. des linken Endes der Zuführungsrolle 6 haben daher keinen Einfluss auf die Lage des Achsstummels 14. Da der Achsstummel 14 in Bezug auf den Maschinenrahmen 5 ortsfest angeordnet sein muss, ist eine Sicherung gegen Verdrehung des Achsstummels 14 notwendig. Um hier äussere Einflüsse auszuschalten, besteht die Verdrehsicherung aus einem relativ dünnwandigen Steg 30, der einerseits mit dem Achsstummel 14 in drehfester Verbindung steht und andererseits über Befestigungsschrauben 31 am Maschinenrahmen 5 festgelegt ist.

Der Steg 30 erfüllt lediglich die Aufgabe, den Achsstummel 14 in seiner dargestellten Lage zu sichern. Durch seine elastische Ausbildung ist er in der Lage, durch äussere Einflüsse hervorgerufene Verformungen in sich selbst aufzunehmen, ohne dass hierbei eine Lageveränderung des Achsstummels 14 auftritt. Durch die vorstehend beschriebene Lagerung der Achsstummel 14 und 15 ist eine von äusseren Einflüssen rückwirkungsfreie Anordnung der Signalerzeugereinrichtung 12 gewährleistet. Auf diese Weise können, wie der praktische Einsatz der erfindungsgemäss ausgestalteten Vorrichtung zum Erkennen von eisenhaltigem Material beweist, unerwünschte Störquellen ausgeschaltet werden.

## Patentansprüche

1. Vorrichtung zum Erkennen von eisenhaltigem Material in Feldhäckslern mit einer Zuführungsvorrichtung (3) für das Erntegut mit mindestens je einer unteren und einer oberen, drehantreibbar gelagerten Zuführungsrolle (6, 8) sowie einer Signalerzeugereinrichtung (12), die ortsfest in einer der Zuführungsrollen beidseitig über Achsstummel (14, 15) gelagert ist,wobei die letztgenannte Zuführungsrolle (6) auf der Seite des Antriebs drehfest mit einem Antriebswellenstummel (17), der über ein Kugellager (19) drehbar an einer den Maschinenrahmen (5) bildenden Seitenwand gelagert ist, verbunden ist, wobei der dem Antriebswellenstummel zugewandte Achsstummel (15) der Achse der Signalerzeugereinrichtung über ein Kugellager (24) auf dem Antriebswellenstummel gelagert ist, während die der Seite des Antriebs gegenüberliegende Seite der Zuführungsrolle über ein weiteres Kugellager (29) abgestützt ist und der dieser Seite zugeordnete Achsstummel (14) der Achse der Signalerzeugereinrichtung über eine Verdrehsicherung (30) an der anderen den Maschinenrahmen (5) bildenden Seitenwand festlegbar ist, gekennzeichnet durch folgende Merkmale:

a) der dem Antriebswellenstummel (17) zugewandte Achsstummel (15) der Achse der Signalerzeugereinrichtung (12) ist über das Kugellager (24), welches mit dem als Pendelkugellager ausgebildeten Kugellager (19), über das die Zuführungsrolle (6) und der Antriebswellenstummel (17) drehbar am Maschinenrahmen (5) gelagert ist, einen gemeinsamen Mittelpunkt aufweist, im Antriebswellenstummel (17) gelagert,
b) die der Seite des Antriebs gegenüberliegende Seite der Zuführungsrolle (6) ist über das als Pendelkugellager ausgeführte Kugellager (29) mittels eines Lagerflansches (28) direkt am Maschinenrahmen (5) gehaltert und
c) die Verdrehsicherung (30) ist elastisch verformbar.

2. Vorrichtung nach Anspruch 1, dadurch gekennzeichnet, dass der Antriebswellenstummel (17) etwa glockenförmig ausgebildet ist und eine Ausdrehung (25) und einen Lagerbund (18) zur Aufnahme des den Achsstummel (15) abstützenden Kugellagers (24) und des als Pendelkugellager ausgeführten Kugellagers (19) zur Abstützung des Antriebswellenstummels (17) aufweist.

3. Vorrichtung nach den Ansprüchen 1 und 2, dadurch gekennzeichnet, dass der Aussenring (20) des als Pendelkugellager ausgebildeten Kugellagers (19) zur Abstützung des Antriebswellenstummels (17) über ein zweiteiliges Lagergehäuse (21) am Maschinenrahmen (5) gehalten ist.

4. Vorrichtung nach Anspruch 1, dadurch gekennzeichnet, dass die Verdrehsicherung (30) aus einem dünnwandigen, elastisch verformbaren Steg gebildet ist, der über Befestigungsmittel (31) am Maschinenrahmen (5) festgelegt ist.

5. Vorrichtung nach den Ansprüchen 1 und 4, dadurch gekennzeichnet, dass auf der der Antriebsseite abgewandten Seite der Zuführungsrolle (6) der Achsstummel (14) der Signalerzeugereinrichtung (12) den Lagerflansch (28) berührungslos durchsetzt und konzentrisch liegend zu diesem angeordnet ist.

## Claims

1. Device for detecting ferrous material in field cultivators having a feed device (3) for the harvested crops, including at least one lower and one upper feed roller (6, 8 respectively) which are mounted in a rotationally drivable manner, and a signal producing or detector device (12) which is stationarily mounted at either end by axle journals (14, 15) in one of the feed rollers, the last-mentioned feed roller (6) being non-rotatably connected at the drive end to a drive-shaft journal (17) which is rotatably mounted on one lateral wall forming the machine frame (5), by a ballbearing (19), the axle journal (15) of the axle of the detector device facing toward the drive-shaft journal (17) being mounted on the drive-shaft journal (17) by a ball-bearing (24), while the end of the feed roller lying opposite the drive end is supported by an additional ball-bearing (29), and the axle journal (14) of the axle of the detector device associated with this end is securable to the other lateral wall forming the machine frame (5) by a rotation-preventing means (30), characterised by the following features:

a) the axle journal (15) of the axle of the detector device (12) facing toward the drive-shaft journal (17) is mounted in the drive-shaft journal (17) by the ball-bearing (24) which has a common centre with the ball-bearing (19) which is in the form of a self-aligning ball-bearing and serves to mount the feed roller (6) and the drive-shaft journal (17) rotatably on the machine frame (5);
b) the end of the feed roller (6) lying opposite the drive end is retained directly on the machine frame (5) by means of a bearing flange (28) via the ball-bearing (29) which is in the form of a self-aligning ball-bearing; and
c) the rotation-preventing means (30) is resiliently deformable.

2. Device according to claim 1, characterised in that the drive-shaft journal (17) is approximately bell-shaped and has a recess (25) and a bearing collar (18) for receiving the ball-bearing (24), which supports the axle journal (15), and for receiving the ball-bearing (19) which is in the form of a selfaligning ball-bearing for supporting the drive-shaft journal (17).

3. Device according to claims 1 and 2, characterised in that the outer ring (20) of the ball-bearing (19), which is in the form of a self-aligning ball-bearing for supporting the driveshaft journal (17), is retained on the machine frame (5) by a two-part bearing housing (21).

4. Device according to claim 1, characterised in that the rotation-preventing means (30) is formed from a thin-walled, resiliently deformable web which is secured to the machine frame (5) by securing means (31).

5. Device according to claims 1 and 4, characterised in that the axle journal (14) of the detector device (12) contactlessly extends through the bearing flange (28) at the end of the feed roller (6) remote from the drive end and is disposed concentrically with said bearing flange.

## Revendications

1. Dispositif pour reconnaître un matériau ferreux dans des ramasseuses-hacheuses avec un dispositif d'alimentation (3) de la récolte avec au moins un rouleau inférieur et un rouleau supérieur d'alimentation (6, 8) pouvant être entraînés en rotation, ainsi qu'un système (12) de production de signaux qui est logé stationnaire dans l'un des rouleaux d'alimentation des deux côtés au moyen d'un bout d'axe (14, 15), et en outre ledit dernier rouleau d'alimentation (6) est relié solidaire en rotation, du côté entraînement, abec un bout d'arbre d'entraînement (17) qui est logé rotatif, au moyen d'un roulement à billes (19) sur une paroi latérale formant le bâti de la machine (5), et le bout d'axe (15) de l'axe du système de production de signaux qui est tourné vers le bout d'arbre d'entraînement est logé au moyen d'un roulement à billes (24) sur le bout d'arbre d'entraînement tandis que le côté face au côté de l'entraînement du rouleau d'alimentation est soutenu par un autre roulement à billes (29) et le bout d'axe (14) affecté à ce côté de l'axe du système de production de signaux peut être fixé au moyen d'une sécurité contre la torsion (30) sur l'autre paroi latérale formant le bâti de la machine (5), caractérisé par ce qui suit:

(a) le bout d'axe (15) de l'axe du système (12) de production de signaux tourné vers le bout d'arbre d'entraînement (17) est logé dans le bout d'arbre d'entraînement (17) par l'intermédiaire du roulement à billes (24) qui présente un centre commun avec le roulement à billes (19) configuré en palier à rotule, par lequel le rouleau d'alimentation (6) et le bout d'arbre d'entraînement (17) sont logés rotatifs sur le bâti (5) de la machine,

(b) le côté du rouleau d'alimentation (6) face au côté de l'entraînement est maintenu directement sur le bâti de la machine (5) au moyen du roulement à billes (29) réalisé sous forme d'un palier à rotule et

(c) la sécurité en torsion (30) est élastiquement déformable.

2. Dispositif selon la revendication 1, caractérisé en ce que le bout d'arbre d'entraînement (17) est à peu près configuré en cloche et présente un alésage (25) et un collet d'appui (18) pour la réception du roulement à billes (24) d'appui du bout d'axe (15) et du roulement à billes (19) configuré en palier à rotule pour l'appui du bout d'arbre d'entraînement (17).

3. Dispositif selon les revendications 1 et 2, caractérisé en ce que la bague externe (20) du roulement à billes (19) configuré en palier à rotule pour l'appui du bout d'arbre d'entraînement (17) est maintenue par un logement de palier (21) en deux parties sur le bâti de la machine (5).

4. Dispositif selon la revendication 1, caratérisé en ce que la sécurité en torsion (30) est formée d'une barrete à paroi mince et élastiquement déformable qui est fixée par des moyens de fixation (31) sur le bâti (5) de la machine.

5. Dispositif selon les revendications 1 et 4, caractérisé en ce que sur le côté éloigné du côté entraînement du rouleau d'alimentation (6) du bout d'axe (14) le système de production de signaux (12) traverse sans contact la bride (28) et est disposé concentriquement à celle-ci.

Fig.1

# Fig. 2